# EUROPEAN PATENT SPECIFICATION

(11) **EP 4 112 389 B1**
(45) Date of publication and mention of the grant of the patent: **05.08.2026**
(21) Application number: 21181990.9
(22) Date of filing: 28.06.2021
(51) Int. Cl.: B60R 19/02, B60R 19/18

(54) **BUMPER BEAM WITH REINFORCEMENT ARRANGEMENT**
STOSSFÄNGERBALKEN MIT VERSTÄRKUNGSANORDNUNG
POUTRE DE PARE-CHOC AVEC AGENCEMENT DE RENFORT

(43) Date of publication of application: 04.01.2023
(73) Proprietor: AUTOTECH ENGINEERING S.L., 48340 Amorebieta-Etxano, Bizkaia (ES)
(72) Inventor: Lundholm, Erik, 974 33 Luleå (SE)
(74) Representative: Ehrner & Delmar Patentbyrå AB

(56) References cited:
- WO-A1-2016/163054
- WO-A1-2020/053799
- WO-A2-2007/050967
- JP-A- 2010 042 753
- KR-A- 20100 023 346
- US-A1- 2018 345 890

## Description

### TECHNICAL FIELD

The invention relates to a bumper beam comprising a crossbeam and a cover plate with a reinforcement arrangement. Further, the invention relates to a body in white comprising such a bumper beam.

### BACKGROUND

In the automotive industry, weight and structural strength are important features for most components, especially components of the body in white of the vehicle. Further, these features tend to counteract each other, which may result in that a compromise has to be accepted between low weight and good structural strength.

One component that stands out as being very important in the design of a body in white of a vehicle for providing a collision secure construction for the vehicle is the bumper beam. The bumper beam is the part of the vehicle that takes the first hit and should therefore be arranged to withstand collisions of different types and at different parts of the bumper beam. Specifically, the bumper beam should be designed to cope with collisions at different parts of the cross beam, and to transmit impact forces to the attachment points of the bumper beam, typically via crash boxes, regardless of the primary impact point on the bumper beam. The bumper beam is conventionally comprised of an elongate crossbeam with a hat profile, also referred to as a U-shape, wherein a cover plate is provided to cover a gap formed between the legs of the crossbeam and to increase the structural strength of the crossbeam.

In a collision with a sole impact point between the attachment points, it is a challenge to convey the forces to the attachment points without allowing the crossbeam to collapse. A problem that may occur in a such a collision is that the crossbeam yields and bends at the impact point, which could immediately weaken the crossbeam without achieving a desired transmission of the impact forces to the attachment points and the crash boxes or the like arranged at the attachment points. Typically, the legs of a U-shaped crossbeam may be pressed towards each other in an impact and allow the crossbeam to bend inwards. This problem has been observed and addressed in the prior art.

In EP 3 604 043 B1 a bumper beam is disclosed in which a longitudinal reinforcement member is arranged to provide a support to the crossbeam and to prevent the legs of the U-shaped crossbeam. The reinforcement member is either a separate longitudinal part that is welded to the legs of the crossbeam or forms part of a cover plate that is welded to the crossbeam.

A similar arrangement where a cover plate with an integrated reinforcing portion that is welded to the crossbeam and arranged to strengthen the construction is disclosed in EP 3 670 272 A1.

Another solution to the problem is presented in US 2020/0317149 A1 in which a longitudinal reinforcement arrangement is provided inside the crossbeam. This is a relatively complicated and heavy construction that is arranged to prevent the crossbeam from collapsing in a collision. Document KR 2010 0023346 A discloses a bumper beam with reinforcing brackets interposed between the bumper beam and the back plate to provide a distance between the bumper beam and a back plate to increase the impact resistance.

It would be advantageous to find another way of achieving a good structural strength without unduly increasing the weight or complexity of the crossbeam.

### SUMMARY OF THE INVENTION

It is an object of the invention to provide a bumper beam comprising a crossbeam and a cover plate, with an increased structural strength without unduly increasing the weight or complexity of the bumper beam.

This object is achieved by the invention according to a first and a second aspect.

According to a first aspect the invention relates to a bumper beam defined by the features of claim 1.

The inventive reinforcement arrangement provides a lightweight and easy to implement improvement of collision performance of a bumper beam allowing to transmit collision forces from a central collision point to attachment points so as to be conveyed to the body in white of the vehicle, e.g. via crash boxes or the like.

According to the invention the height of the support portion of the reinforcement member is adapted to fit tightly between the two legs of the crossbeam. Specifically, the support portion may be arranged the closely align the two legs of the crossbeam to provide a support as soon as the legs of the crossbeam start collapsing towards each other.

Furthermore, according to the invention the at least two attachment portions of the at least one reinforcement member are welded to the inside of the cover plate.

Furthermore, according to the invention the at least one reinforcement member is not welded to the crossbeam. It is advantageous to avoid welds to the legs or web of the crossbeam as such welds could risk to negatively affect the mechanical properties of the crossbeam.

In specific embodiments the cover plate is welded to the outer portions of the opposed legs of the crossbeam.

In specific embodiments a front side of the cover plate, which is arranged to face outwards from the vehicle, is substantially plane and unaffected by the provision of the at least one reinforcement member on the inside of the cover plate. This is an advantageous effect of the invention residing from that the reinforcement member may be provided in a manner that does not influence the exterior design of the bumper beam.

In specific embodiments the at least one reinforcement member is integrally formed of a bent plate.

In specific embodiments the at least two attachment portions include flanges which are configured to align with the inside of the cover plate and to be attached thereto.

According to the invention the at least one reinforcement member is a U-shaped plate comprising a central portion that constitutes the support portion and two attachment portions at end portions of the U-shaped plate, which are welded to the inside of the cover plate.

In specific embodiments a plurality of reinforcement members are arranged at a distance from each other along the length of the cover plate. The simplex design of the reinforcement member makes it possible to provide a plurality of reinforcement members along the length of the cover plate to provide an increased protection against collapsing legs of the crossbeam.

According to a second aspect the invention relates to a body in white of a vehicle, comprising a bumper beam as defined above.

Other embodiments and advantages will be apparent from the detailed description and the appended drawings.

### BRIEF DESCRIPTION OF THE DRAWINGS

Below, specific embodiments of the invention will be described with reference to the appended drawings, of which;
- **Fig. 1**: is a perspective view of a bumper beam comprising a crossbeam and a cover plate,
- **Fig. 2**: is an exploded view of the bumper beam in Fig. 1,
- **Fig. 3**: is a cut view of the bumper beam in Fig. 1,
- **Fig. 4**: is a perspective view of a cover plate with a reinforcement member according to a first embodiment,
- **Fig. 5**: is a perspective view of a cover plate with a reinforcement member according to a second embodiment,
- **Fig. 6**: is a perspective view of a cover plate with a reinforcement member according to a third embodiment,
- **Fig. 7**: is a side view of a reinforcement member according to a fourth embodiment,
- **Fig. 8**: is a side view of a reinforcement member according to a fifth embodiment, and
- **Fig. 9**: is a side view of a reinforcement member according to a sixth embodiment.

### DETAILED DESCRIPTION OF THE SHOWN EMBODIMENTS

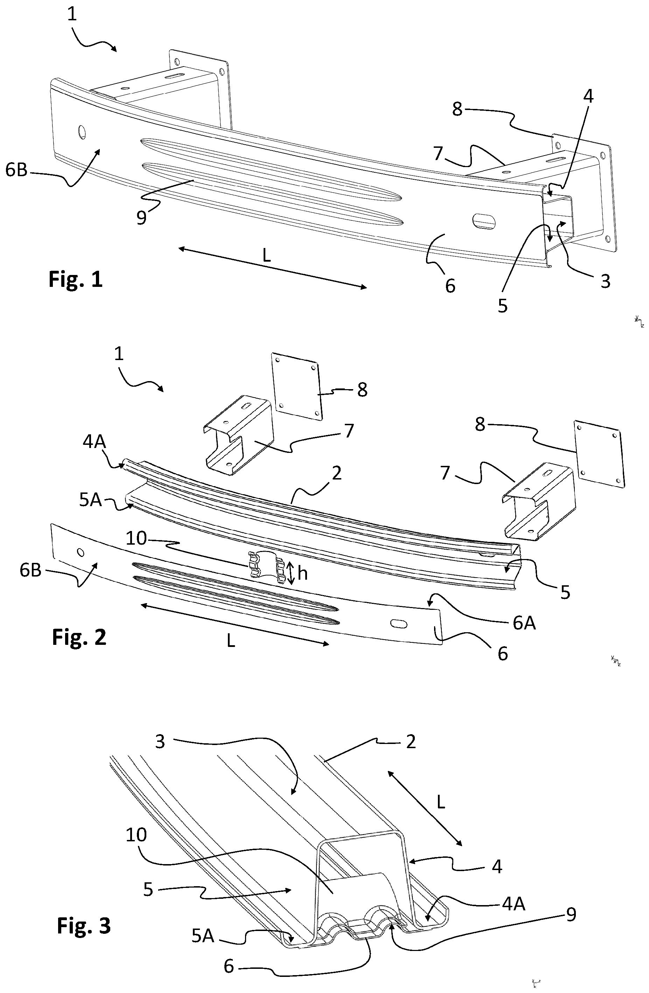

Fig. 1 is a perspective view of a bumper beam 1 for a vehicle, the bumper beam 1 comprising a crossbeam 2 and a cover plate 6.

The crossbeam 2 is an elongate crossbeam extending in a longitudinal direction L which is orthogonal with respect to a moving direction of the vehicle, when arranged on a vehicle. The crossbeam 2 has a U-shaped cross section including an elongate web 3 and two opposed legs 4 and 5, one upper leg 4 and one lower leg 5 extending from opposite sides of the web 3 at a distance from each other. The web 3 and the legs 4 and 5 are elongate and extend in said longitudinal direction L. The crossbeam 2 is configured to be arranged as a bumper beam 1 at the front or at the rear of a vehicle. Hence, as is conventional in the art, the crossbeam 2 is arranged to extend longitudinally along the front or rear of a vehicle, wherein the upper leg 4 and the lower leg 5 extend outwards, away from the vehicle.

The cross section of the crossbeam 2 may vary over the length of the crossbeam 2. For example, the hat profile of the crossbeam 2 may be less accentuated towards the lateral ends of thereof, and in some embodiments the end portions of the crossbeam 2 may have no U-shape at all, but instead the crossbeam may have a flat outside at its end portions such that no cover portion is needed at the end portions. The reinforcement arrangement is configured to be arranged in a bumper beam with a crossbeam of which at least a central portion has a U-shaped or hat profiled cross section, wherein at least a part of said U-shaped or hat profiled central portion is covered by a cover plate. Hence, the cover plate 6 may be shorter than the crossbeam in the longitudinal direction L, and even shorter than the U-shaped part of the crossbeam and need not cover the gap along the whole length of the crossbeam 2.

The cover plate 6 has an elongate shape and extending in the longitudinal direction L and is arranged to be attached to outer portions of the opposed legs 4 and 5 and to close the gap between the legs 4 and 5. The cover plate 6 has an inside 6A arranged to face a space formed between the web 3 and the legs 4 and 5 of the crossbeam 2 and an outside 6B arranged to face away from the crossbeam 2. The outside 6B of the cover plate 6 is arranged to constitute the exterior part of the bumper beam 1 when arranged on a vehicle.

In Fig. 2, the bumper beam 1 is shown in a disassembled state and from Figs. 1 and 2 it is evident that the crossbeam 2 of the bumper beam 1 is arranged to be attached to crash boxes 7 or the like which in turn are attached, e.g. via plates 8, to side beams (not shown) of a vehicle body in white also known as chassis or underbody. As an alternative, the crossbeam 2 may be attached to side beams of a vehicle body in white via brackets, without the use of crash boxes. In yet another alternative the bumper beam 1 is attached directly to the side beams without the use of brackets or crash boxes.

In accordance with an inventive reinforcement arrangement at least one reinforcement member 10 is provided on the inside 6A of the cover plate 6. The reinforcement member 10 mainly extends orthogonally with respect to the extension of the elongate cover plate 6, i.e. orthogonal with respect to the longitudinal direction L. Hence, when the crossbeam 2 is arranged as a bumper beam, longitudinally on a vehicle, the reinforcement member 10 extends vertically and orthogonally with respect to the longitudinal extension L of the crossbeam 2. The reinforcement member 10 has a height h orthogonally to the longitudinal direction L of the cover plate 6 that is configured to fit tightly between the two legs 4,5 of the crossbeam 2.

Fig. 3 is a cut view that illustrates how a reinforcement member 10 is provided on the inside 6A of the cover plate 6. The reinforcement member 10 is configured to extend between the legs 4 and 5 to support the legs from being pressed towards each other when subjected to external forces, i.e. in the event of a collision involving the bumper beam. Specifically, the reinforcement arrangement is configured to improve the properties of the bumper beam in a collision with an impact point between the attachment points of the bumper beam, which in the shown embodiment are formed at the crash boxes 7.

The reinforcement member 10 may be arranged to be in contact with the legs 4 and 5, or it may be arranged to extend to leave only a very short gap to the legs 4 and 5. Specifically, the reinforcement member 10 comprises an attachment section 10A to be attached to the cover plate 6 and a support section 10B. The height h of the support portion 10B of the reinforcement member 10 is adapted to fit tightly between the two legs 4,5 of the crossbeam 2. In this context the term height indicates a vertical direction when the reinforcement member 10 is arranged in a bumper beam on a vehicle. Also, it refers to the height, or distance, between the two legs 4,5 of the crossbeam 2.

The reinforcement member 10 is not welded to the crossbeam 2, because such a weld could be detrimental to the mechanical properties of the bumper beam and negatively influence its ability to withstand a collision.

The reinforcement member 10 is a separate part that is attached to the inside 6A of the cover plate 6, it is welded to the inside 6A of the cover plate 6. The cover plate 6 is, in turn, preferably welded to the outer portions of the opposed legs 4 and 5 of the crossbeam 2. The reinforcement member 10 functions as a bulkhead or strut arranged to prevent the legs 4 and 5 to collapse towards each other, and as a consequence the reinforcement member 10 assist in preventing the cross beam from bending inwards in a collision at a central portion of the crossbeam 2. The central portion of the crossbeam 2 may be defined as the portion of the crossbeam extending between the attachment points to the crash boxes, crash brackets or the like.

Now, with reference to Figs. 1-2, in a collision against the bumper beam 1 between the crash boxes 7, the crossbeam 2 will tend to bend inwards, which bending may be allowed in that the legs 4 and 5 may collapse towards each other. By preventing the legs 4 and 5 from collapsing towards each other the bumper beam 1 will cope with the collision forces in a more beneficial manner and transmit a greater portion of the collision forces to the crash boxes 7, or the like, such that the resistance of the bumper beam 1 against bending inwards will be increased.

The front side 6B of the cover plate 6 is substantially plane. In the shown embodiment the cover plate 6 is provided with one or more longitudinal bends 9, in the form of one or more bulges or indentations, running along the length of the cover plate 6. Regardless of the form of the cover plate 6, its front side 6B may preferably be unaffected in appearance by the reinforcement member 10. The reinforcement member 10 may preferably be formed of a bent plate, and its attachment section or sections may easily be adapted to the specific shape of the cover plate 6.

In the embodiments shown in Figs. 2-4, the attachment section 10A of the reinforcement member 10 consist of two end portions with flanges 12. The flanges 12 are configured to align with the inside 6A of the cover plate 6 to provide a contact surface which may glued or welded to the inside 6A of the cover plate 6. The support section 10B consists of an arc-shaped section that extend between the flanges 12 to provide a support beteween the legs 4 and 5 of the crossbeam 2. The height h of the support section 10B of the reinforcement member 10 is hence adapted to the distance between the legs 4 and 5 of the crossbeam 2. Also, in order to achieve a strong structure, the height of the reinforcement member 10 is substantially the same over its full length, such that the attachment section 10A and the support section 10B have substantially the same height. The shape of the reinforcement member 10 is preferably adapted to the shape of the crossbeam 2. Conventionally, for production reasons, the legs of the crossbeam diverges slightly from each other. Therefore, the height of the reinforcement member may slightly decrease away from the attachment portions 10A towards the centre of the support portion 10B.

The reinforcement arrangement may include a plurality of reinforcement members 10, arranged at a distance from each other along the length of the cover plate 6. In view of that the reinforcement members 10 may be formed of bent plates, the weight of the reinforcement members 10 will not be important such that the whole bumper beam will only be slightly heavier.

Also, the reinforcement member 10 may be configured in many different ways.

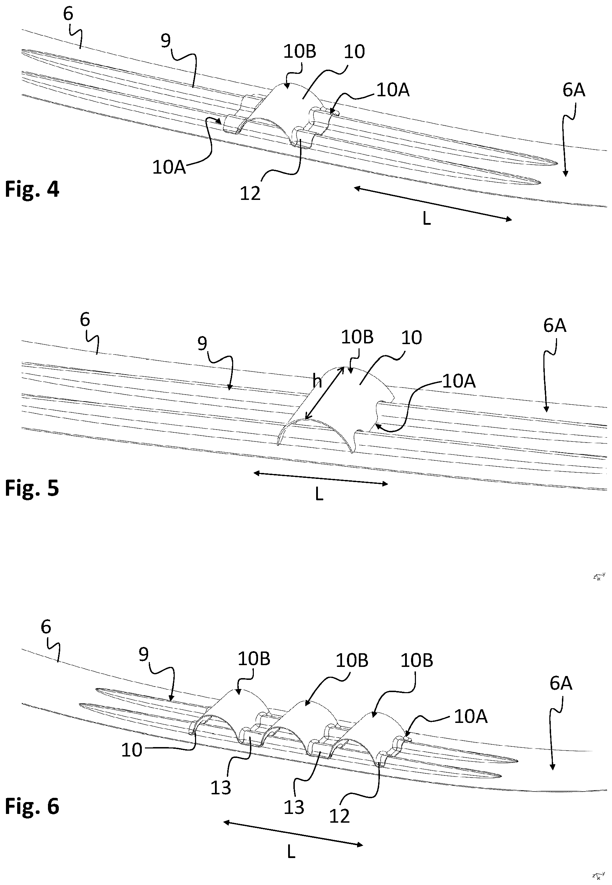

In Fig. 5 an alternative, second embodiment is shown, in which the attachment section 10A of the reinforcement member 10 consists of two end portions without flanges. Instead, the end portions are shaped to fit the shape of the inside 6A of the cover plate 6 and to be welded to the inside 6A of the cover plate 6 along at least a portion of the contour of the end portions. In accordance with the embodiment of Figs. 2-4, the support section 10B of the reinforcement member 10 consists of an arc-shaped section that extends between the two end portions that constitute the attachment section 10A of this embodiment.

In Fig. 6, a third embodiment is shown, in which the support section 10B is comprised of three arc-shaped sections. The attachment section 10A of the reinforcement member 10 of this embodiment is comprised of two flanges 12 and two intermediate sections 13 which are welded to the inside 6A of the cover plate 6. In all the shown embodiments the attachment section 10A of the reinforcement member 10 is configured to align with longitudinal ridges 9 arranged along the length of the cover plate 6. However, the attachment section 10A of the reinforcement member 10 may of course be adapted to the shape of the cover plate 6 so as to align with the inside 6A of the cover plate 6.

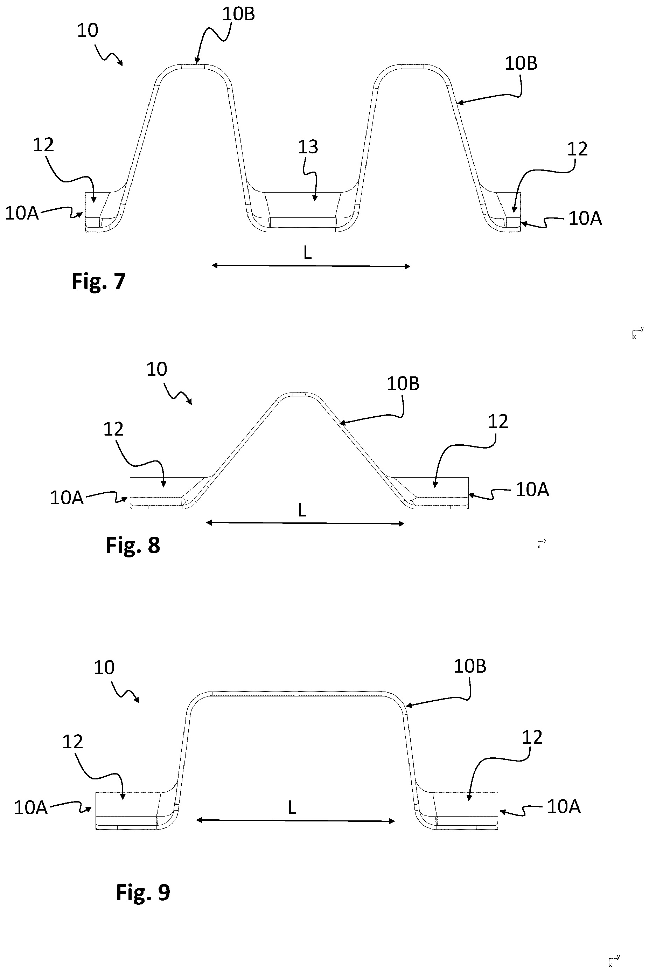

In Fig. 7, a fourth embodiment of a reinforcement member 10 is shown, in which the attachment section 10A thereof is comprised of two flanges 12 and an intermediate section 13, which are welded to the inside 6A of the cover plate 6. Further, the reinforcement member 10 includes two support sections 10B formed of two converging legs which are joined by a short portion that extend in the longitudinal direction L of the cover plate.

In Fig. 8, a fifth embodiment of a reinforcement member 10 is shown, in which the attachment sections 10A thereof are comprised of two flanges 12 which are welded to the inside 6A of the cover plate 6. The support section 10B of the reinforcement member 10 is V-shaped and positioned to extend into the space between the legs of the crossbeam, the bend of the V being positioned inside said space at a distance from both the cover plate and the web 3 of the crossbeam 2.

Preferably, for all embodiments, the innermost part of the support section 10B of the reinforcement member 10 may be positioned at a position corresponding to at least a fifth of the distance from the cover plate to the web of the crossbeam 2, preferably at least a fourth or a third said distance. It should however preferably not extend to more than two thirds of said difference. In fact, it does not need to extend more than half of the distance from the cover plate to the web of the crossbeam 2. As may be understood by a skilled person, support section 10B is as most useful to keep the legs 4 and 5 of the crossbeam 2 apart when arranged as far out from the web 3 as possible, as long as it is still positioned between the legs 4 and 5 so as to provide a support for said legs.

In Fig. 9, a sixth embodiment of a reinforcement member 10 is shown, in which the support section 10B comprises a relatively long, preferably longer than 2 cm and even more preferably longer than 4 cm, longitudinal portion extending substantially parallel to the longitudinal direction L of the cover plate to which it should be attached. Leg portions are arranged to connect the attachment sections 10A of the reinforcement member 10 to each other via the longitudinal portion. The leg portions preferably extend with an angle of more than 45 degrees but less than 90 degrees with respect the longitudinal direction L along which the longitudinal portion extends.

The reinforcement member 10 may advantageously be formed of combinations and variations of the embodiments disclosed herein. Hence, the reinforcement member 10 includes at least two attachment sections 10A which may or may not include flanges 12, Further, the reinforcement member 10 includes at least one support section 10B arranged between the attachment sections 10A. For a reinforcement member 10 with more than one support section 10B an intermediate flange 13 may be arranged between each pair of support sections 10B, which may or may not be attached to the inside 6A of the cover plate.

Above, the invention has been described with reference to specific embodiments. The invention is however not limited to these embodiments. These and other embodiments are possible within the scope of the following claims.

## Claims

1. A bumper beam (1) comprising a crossbeam (2) and a cover plate (6), the crossbeam (2) having an elongate shape in a longitudinal direction (L) with a U-shaped cross section including an elongate web (3) and two opposed legs (4,5) extending from opposite sides of said web (3) at a distance from each other and forming a space between them, and wherein the cover plate (6) has an elongate shape in the longitudinal direction (L) and is arranged to be attached to outer portions (4A,5A) of the opposed legs (4,5) and to close a gap formed between the legs (4,5) over at least a central portion of the crossbeam (2), wherein the cover plate (6) has an inside (6A) arranged to face a space formed between the web (3) and the two legs (4,5) of the crossbeam (2) and an outside (6B) arranged to face away from the crossbeam (2), wherein the cover plate (6) includes at least one reinforcement member (10) attached directly to the inside (6A) of the cover plate (6), the reinforcement member (10) comprising at least two attachment portions (10A) configured to be attached to the inside (6A) of the cover plate (6) at a distance from each other in the longitudinal direction (L) of the cover plate (6), and at least one support portion (10B) configured to extend between the two attachment portion (10A) and at least partly into the space between the legs (4,5) of the crossbeam (2) to support the legs (4,5) from being pressed towards each other when the crossbeam (2) is subjected to external forces, wherein the height (h) of the support portion (10B) orthogonally to the longitudinal direction (L) of the cover plate (6) is configured to fit tightly between the two legs (4,5) of the crossbeam (2), and wherein the at least one reinforcement member (10) is not welded to the crossbeam (2), and the at least one reinforcement member (10) is a U-shaped plate comprising a central portion that constitutes the support portion (10B) and the at least two attachment portions (10A) at end portions of the U-shaped plate, which attachment portions (10A) are welded to the inside (6A) of the cover plate (6).

2. The bumper beam (1) according claim 1, wherein the cover plate (6) is welded to the outer portions (4A,5A) of the opposed legs (4,5) of the crossbeam (2).

3. The bumper beam (1) according to any one of the preceding claims, wherein a front side (6B) of the cover plate (6), which is arranged to face outwards from the vehicle, is substantially plane and unaffected by the provision of the at least one reinforcement member (10) on the inside (6A) of the cover plate (6).

4. The bumper beam (1) according to any one of the preceding claims, wherein the at least one reinforcement member (10) is integrally formed of a bent plate.

5. The bumper beam (1) according to any one of the preceding claims, wherein the at least two attachment portions (10A) include flanges (12) which are configured to align with the inside (6A) of the cover plate (6) and to be attached thereto.

6. The bumper beam (1) according to any one of the preceding claims, wherein a plurality of reinforcement members (10) are arranged at a distance from each other in the longitudinal direction (L) of the cover plate (6).

7. A body in white of a vehicle, **characterised in that** it comprises a bumper beam (1) according to anyone of the preceding claims.

## Patentansprüche

1. Stoßfängerträger (1), der einen Querträger (2) und eine Abdeckplatte (6) umfasst, wobei der Querträger (2) eine längliche Form in einer Längsrichtung (L) mit einem U-förmigen Querschnitt aufweist, der einen länglichen Steg (3) und zwei gegenüberliegende Schenkel (4, 5) umfasst, die sich von gegenüberliegenden Seiten des Stegs (3) in einem Abstand voneinander erstrecken und einen Raum zwischen ihnen bilden, und wobei die Abdeckplatte (6) eine längliche Form in der Längsrichtung (L) aufweist und angeordnet ist, um an äußeren Abschnitten (4A, 5A) der gegenüberliegenden Schenkel (4, 5) befestigt zu werden und um einen Spalt zu schließen, der zwischen den Schenkeln (4, 5) über mindestens einem mittleren Abschnitt des Querträgers (2) gebildet ist,
wobei die Abdeckplatte (6) eine Innenseite (6A), die so angeordnet ist, dass sie einem Raum zugewandt ist, der zwischen dem Steg (3) und den zwei Schenkeln (4, 5) des Querträgers (2) gebildet ist, und eine Außenseite (6B), die so angeordnet ist, dass sie vom Querträger (2) abgewandt ist, aufweist, wobei die Abdeckplatte (6) mindestens ein Verstärkungselement (10) beinhaltet, das direkt an der Innenseite (6A) der Abdeckplatte (6) befestigt ist, wobei das Verstärkungselement (10) mindestens zwei Befestigungsabschnitte (10A) umfasst, die dazu ausgelegt sind, an der Innenseite (6A) der Abdeckplatte (6) in einem Abstand voneinander in der Längsrichtung (L) der Abdeckplatte (6) befestigt zu sein, und mindestens einen Stützabschnitt (10B), der dazu ausgelegt ist, sich zwischen den zwei Befestigungsabschnitten (10A) und zumindest teilweise in den Raum zwischen den Schenkeln (4, 5) des Querträgers (2) zu erstrecken, um die Schenkel (4, 5) zu stützen, sodass sie nicht aufeinander zu gedrückt werden, wenn der Querträger (2) äußeren Kräften ausgesetzt ist, wobei die Höhe (h) des Stützabschnitts (10B) orthogonal zur Längsrichtung (L) der Abdeckplatte (6) dazu ausgelegt ist, genau zwischen die zwei Schenkel (4, 5) des Querträgers (2) zu passen, und wobei das mindestens eine Verstärkungselement (10) nicht mit dem Querträger (2) verschweißt ist und das mindestens eine Verstärkungselement (10) eine U-förmige Platte ist, die einen mittigen Abschnitt umfasst, der den Stützabschnitt (10B) und die mindestens zwei Befestigungsabschnitte (10A) an den Endabschnitten der U-förmigen Platte bildet, wobei die Befestigungsabschnitte (10A) mit der Innenseite (6A) der Abdeckplatte (6) verschweißt sind.

2. Stoßfängerträger (1) nach Anspruch 1, wobei die Abdeckplatte (6) mit den äußeren Abschnitten (4A, 5A) der gegenüberliegenden Schenkel (4, 5) des Querträgers (2) verschweißt ist.

3. Stoßfängerträger (1) nach einem der vorhergehenden Ansprüche, wobei eine Vorderseite (6B) der Abdeckplatte (6), die so angeordnet ist, dass sie von dem Fahrzeug nach außen weist, im Wesentlichen eben ist und nicht durch das Vorsehen des mindestens einen Verstärkungselements (10) an der Innenseite (6A) der Abdeckplatte (6) beeinflusst wird.

4. Stoßfängerträger (1) nach einem der vorhergehenden Ansprüche, wobei das mindestens eine Verstärkungselement (10) integral aus einer gebogenen Platte gebildet ist.

5. Stoßfängerträger (1) nach einem der vorhergehenden Ansprüche, wobei die mindestens zwei Befestigungsabschnitte (10A) Flansche (12) beinhalten, die dazu ausgelegt sind, mit der Innenseite (6A) der Abdeckplatte (6) ausgerichtet und daran befestigt zu werden.

6. Stoßfängerträger (1) nach einem der vorhergehenden Ansprüche, wobei mehrere Verstärkungselemente (10) in einem Abstand voneinander in der Längsrichtung (L) der Abdeckplatte (6) angeordnet sind.

7. Karosserierohbau eines Fahrzeugs, **dadurch gekennzeichnet, dass** er einen Stoßfängerträger (1) nach einem der vorhergehenden Ansprüche umfasst.

## Revendications

1. Poutre de pare-chocs (1) comprenant une poutre transversale (2) et une plaque-couvercle (6), la poutre transversale (2) ayant une forme allongée dans une direction longitudinale (L) avec une section transversale en forme de U incluant une âme allongée (3) et deux ailes opposées (4, 5) s'étendant depuis des côtés opposés de ladite âme (3) à une distance l'une de l'autre et formant un espace entre elles, et dans laquelle la plaque-couvercle (6) a une forme allongée dans la direction longitudinale (L) et est agencée pour être fixée à des parties extérieures (4A, 5A) des ailes opposées (4, 5) et pour fermer un écart formé entre les ailes (4, 5) par-dessus au moins une partie centrale de la poutre transversale (2),
dans laquelle la plaque-couvercle (6) a un intérieur (6A) agencé pour faire face à un espace formé entre l'âme (3) et les deux ailes (4, 5) de la poutre transversale (2) et un extérieur (6B) agencé pour faire face à l'opposé de la poutre transversale (2), dans laquelle la plaque-couvercle (6) inclut au moins un élément de renfort (10) fixé directement à l'intérieur (6A) de la plaque-couvercle (6), l'élément de renfort (10) comprenant au moins deux parties de fixation (10A) configurées pour être fixées à l'intérieur (6A) de la plaque-couvercle (6) à une distance l'une de l'autre dans la direction longitudinale (L) de la plaque-couvercle (6), et au moins une partie de support (10B) configurée pour s'étendre entre les deux parties de fixation (10A) et au moins partiellement dans l'espace entre les ailes (4, 5) de la poutre transversale (2) pour supporter les ailes (4, 5) pour qu'elles ne soient pas comprimées l'une vers l'autre lorsque la poutre transversale (2) est soumise à des forces externes, dans laquelle la hauteur (h) de la partie de support (10B) orthogonalement à la direction longitudinale (L) de la plaque-couvercle (6) est configurée pour s'ajuster de façon serrée entre les deux ailes (4, 5) de la poutre transversale (2), et dans laquelle l'au moins un élément de renfort (10) n'est pas soudé à la poutre transversale (2), et l'au moins un élément de renfort (10) est une plaque en forme de U comprenant une partie centrale qui constitue la partie de support (10B) et les au moins deux parties de fixation (10A) au niveau de parties d'extrémité de la plaque en forme de U, lesquelles parties de fixation (10A) sont soudées à l'intérieur (6A) de la plaque-couvercle (6).

2. Poutre de pare-chocs (1) selon la revendication 1, dans laquelle la plaque-couvercle (6) est soudée aux parties extérieures (4A, 5A) des ailes opposées (4, 5) de la poutre transversale (2).

3. Poutre de pare-chocs (1) selon l'une quelconque des revendications précédentes, dans laquelle un côté avant (6B) de la plaque-couvercle (6), qui est agencé pour faire face vers l'extérieur, à partir du véhicule, est sensiblement plan et non affecté par la fourniture de l'au moins un élément de renfort (10) sur l'intérieur (6A) de la plaque-couvercle (6).

4. Poutre de pare-chocs (1) selon l'une quelconque des revendications précédentes, dans laquelle l'au moins un élément de renfort (10) est formé de façon monobloc d'une plaque cintrée.

5. Poutre de pare-chocs (1) selon l'une quelconque des revendications précédentes, dans laquelle les au moins deux parties de fixation (10A) incluent des brides (12) qui sont configurées pour s'aligner avec l'intérieur (6A) de la plaque-couvercle (6) et pour être fixées à celui-ci.

6. Poutre de pare-chocs (1) selon l'une quelconque des revendications précédentes, dans laquelle une pluralité d'éléments de renfort (10) sont agencés à une distance les uns des autres dans la direction longitudinale (L) de la plaque-couvercle (6).

7. Carrosserie brute d'un véhicule, **caractérisée en ce qu'**elle comprend une poutre de pare-chocs (1) selon l'une quelconque des revendications précédentes.
